# DEMANDE DE BREVET EUROPEEN

(11) **EP 1 206 020 A1**
(43) Date de publication de la demande: **15.05.2002**
(21) Numéro de dépôt: 00490049.4
(22) Date de dépôt: 14.11.2000
(51) Int. Cl.: H02G 3/04

(54) **Chemin de câble en treillis obtenu par assemblage d'éléments longilignes métalliques**

(71) Demandeur: Tolmega, S.A., 62400 Bethune (FR)
(72) Inventeur: De L'Hamaide, Nicolas, 62400 Bethune.France (FR)
(74) Mandataire: Ecrepont, Robert

(57) **Abrégé**

Chemin de câbles en treillis obtenu par assemblage d'éléments longilignes (2) métalliques soudés sur des éléments transversaux ou fils (3) conformés en U comprenant notamment des rives sur lesquels les câbles peuvent être déplacés ou frottés sans inconvénients.

Ce chemin de câbles est caractérisé en ce que :
- la face extérieure de chemin de câbles en U porte au moins un fil (2A) dit de rive plié en onde dans un plan sensiblement parallèle à celui défini par le fond du chemin de câbles, et
- c'est à l'extérieur des fils transversaux que sont fixés les premiers segments (20) avec la génératrice supérieure de ce fil de rive qui est sensiblement tangente au plan horizontal contenant au moins partiellement les faces des fils transversaux en U tandis que les seconds segments sont ramenés vers l'intérieur du chemin de câbles.

## Description

L'invention se rapporte à des chemins de câbles en treillis obtenus par assemblage d'éléments longilignes métalliques.

Par éléments longilignes, on désigne des fils ou des barres, par exemple, mais non limitativement, de section circulaire.

Par tronçons de chemins pour câbles, on désigne des pièces allongées, de longueur déterminée et dont la section transversale a sensiblement l'allure d'un U, c'est à dire des pièces qui comprennent chacune une paroi de fond et deux parois latérales.

Par tronçons de chemins pour câbles en treillis de fils métalliques soudés, on désigne des pièces du type précité qui sont constituées, d'une part, longitudinalement par une pluralité de fils qui s'étendent dans la direction longitudinale et, d'autre part, transversalement par une pluralité de fils qui apparaissent conformés en U et sur lesquels fils en U sont soudés les fils longitudinaux.

La mise en place et le retrait des câbles électriques à l'intérieur du chemin de câbles provoquent parfois une usure prématurée de l'enveloppe protectrice des câbles électriques.

On connaît un chemin de câble (FR-A-2.617.341) dont la paroi latérale comprend :
- un premier élément longiligne fixé à mis hauteur et à l'extérieur de la branche verticale du fil transversal en U et
- un deuxième élément longiligne fixé sur la face extrême du fil transversal conformé en U.

Les bouts du fil en U sont alors recouverts par cet élément longiligne, ce qui fait disparaître l'arête et protège donc les câbles électriques..

Outre cet aspect, les tronçons de cet élément longiligne fixé au dessus des extrémités du U qui sont situés entre les pièces en U sont, par pliage, ramenés vers l'extérieur du U pour se situer dans le même plan vertical que celui défini par le premier élément longiligne précité fixé à mi-hauteur de la branche verticale et à l'extérieur du U.

Un résultat que l'invention vise à obtenir est un tronçon de chemin pour câbles dont les caractéristiques mécaniques sont optimisées.

Un autre résultat que l'invention vise à obtenir est un tronçon de chemin pour câbles qui comprend notamment des rives sur lesquelles les câbles peuvent être déplacés ou frottés sans inconvénient, c'est à dire sans risque d'être blessés par les faces terminales ou extrêmes des extrémités supérieures d'une branche d'un élément ou fil transversal en U.

A cet effet, l'invention a pour objet un chemin de câbles en treillis formé de fils longilignes métalliques soudés sur des fils transversaux conformés en U comprenant notamment des rives sur lesquelles les câbles peuvent être déplacés ou frottés sans inconvénient, cette pièce étant notamment caractérisée en ce que:
- d'une part, la face extérieure du chemin de câble en U porte au moins un fil dit de rive plié en onde dans un plan sensiblement parallèle à celui défini par le fond du chemin de câbles, ce fil de rive comprenant des premiers segments de droites alignés selon un premier axe et des seconds segments de droites alignés selon un deuxième axe, les dits segments étant reliés par des tronçons dits de liaison et
- d'autre part, c'est à l'extérieur des fils transversaux que sont fixés les premiers segments avec la génératrice supérieure de ce fil de rive qui est sensiblement tangente au plan horizontal contenant au moins partiellement les faces dites extrêmes des fils transversaux en U tandis que les seconds segments se situent dans le plan défini par les branches verticales des fils transversaux en U.

L'invention sera bien comprise à la lecture de la description ci-après faite à titre d'exemple non limitatif, en regard du dessin ci-annexé qui représente schématiquement :
- figures 1 et 2 : des vues en coupe transversale de deux exemples de chemin de câbles,
- figure 3 : une vue en gros plan d'un détail de la figure 2,
- figure 4 : une vue de dessus de l'invention,

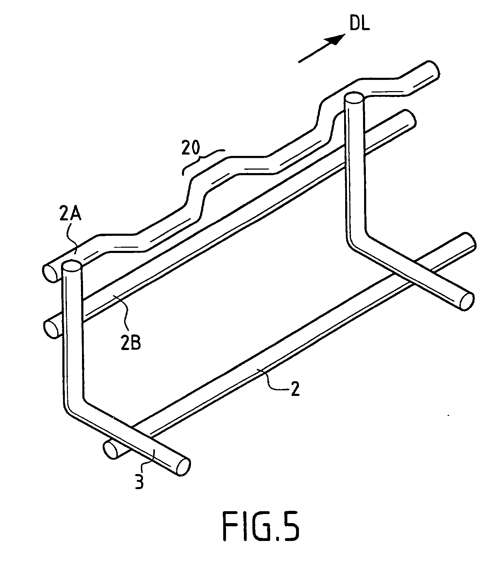

- figure 5 : une vue en perspective de l'invention.

En se reportant au dessin, on voit plusieurs pièces allongées 1 ou chemins de câbles en treillis, qui sont chacun constitués de fils longilignes 2 métalliques soudés sur des fils transversaux 3.

Par exemple, ces pièces sont destinées à réaliser des tronçons de chemin pour câbles.

Chaque tronçon de chemin de câbles 1, de longueur déterminée, est constitué :
- d'une part, longitudinalement, par une pluralité de fils longilignes 2 rectilignes ou non qui s'étendent dans une direction longitudinale DL selon une disposition transversale déterminée et,
- d'autre part, transversalement, par une pluralité de fils longilignes 3 dits transversaux qui apparaissent conformés en U et soudés avec les fils longilignes 2 orientés dans la direction longitudinale DL, également de manière à respecter une répartition longitudinale préalablement définie.

Par ailleurs, ces chemins de câbles comprennent des rives sur lesquelles les câbles peuvent être déplacés ou frottés sans inconvénients.

Dans une forme remarquable de réalisation :
- d'une part, la face extérieure de chemin de câbles en U porte au moins un fil 2A dit de rive plié en onde dans un plan sensiblement parallèle à celui défini par le fond de la pièce allongée, ce fil de rive comprenant des premiers 20 segments de droites alignés selon un premier axe et des seconds 30 segments de droites alignés selon un deuxième axe, les dits segments étant reliés par des tronçons dits de liaison et
- d'autre part, c'est à l'extérieur des fils transversaux que sont fixés les premiers segments 20 avec la génératrice supérieure de ce fil de rive qui est sensiblement tangente au plan P1 horizontal contenant au moins partiellement les faces 3A dites extrêmes des fils transversaux en U tandis que les seconds segments 30 sont ramenés vers l'intérieur du chemin de câbles et se situent sensiblement dans le plan défini par les branches verticales des fils transversaux en U.

Cette génératrice supérieure de ce fil de rive pourra être, de préférence, légèrement au dessus de ce plan P1.

De préférence, la génératrice 100 des seconds segments du fil de rive située au plus près du plan M médian vertical du chemin de câbles est à une distance Q de ce plan médian qui est inférieure à celle R mesurée entre ce plan médian et la génératrice dite interne de la branche verticale du fil transversal en U.

Une partie du fil de rive fait donc saillie à l'intérieur du chemin de câbles.

Ainsi, en ramenant les seconds segments vers l'intérieur du chemin de câble et de préférence légèrement en saillie à l'intérieur du chemin de câble , on accentue l'effet du moyen de protection.

En effet, le fil de rive permet de dévier les câbles au droit des fils transversaux et ainsi éviter que les arêtes de ces fils transversaux blesse les gaines.

Avantageusement, chacune des faces extrêmes 3A de l'élément transversal en U est arasée en biais en direction du fond de la pièce allongée et les premiers segments du fil de rive sont tangents au plan contenant la face biaise des éléments transversaux en U.

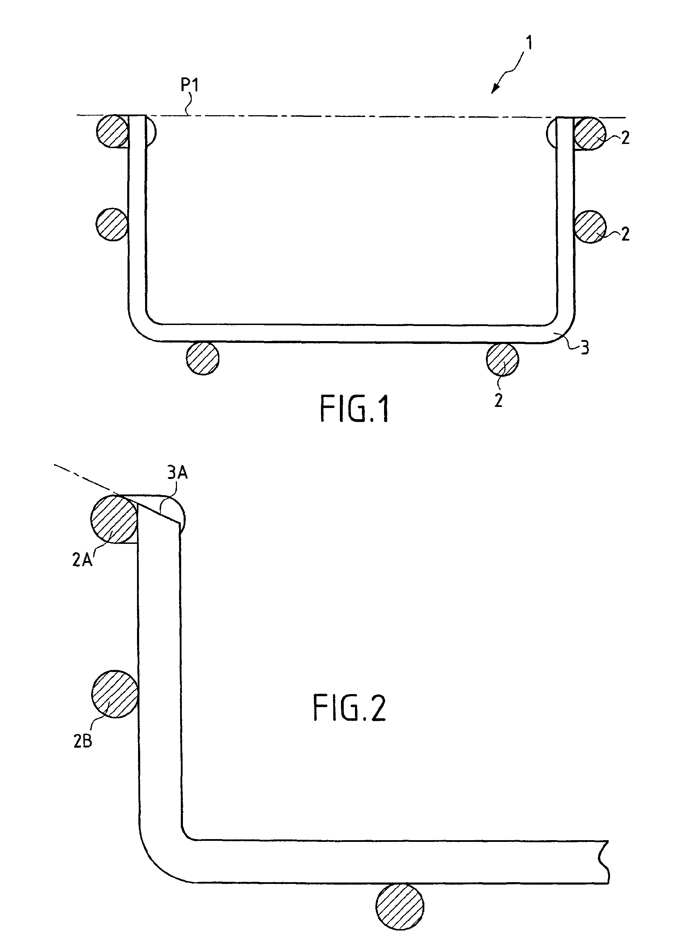

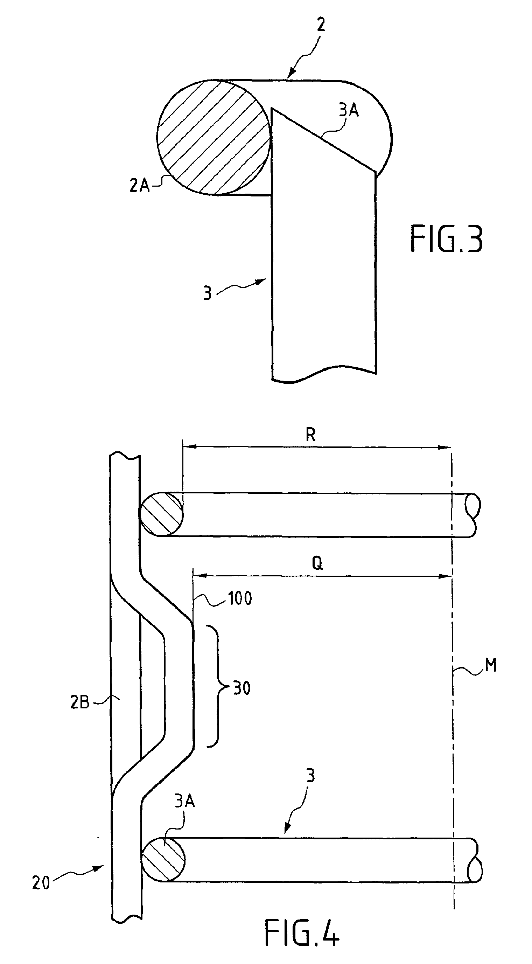

Cette dernière disposition (figures 2 et 3 ) est particulièrement avantageuse en ce sens qu'elle accentue la protection des câbles car elle permet de constituer des rives de tronçons de chemin pour câbles sur lesquelles les câbles peuvent être déplacés ou frottés sans inconvénients, c'est à dire sans risque être blessés par les faces extrêmes des branches d'un élément transversal 3 en U.

On voit bien , notamment en figure 3, que le tronçon du fil de rive ramené vers l'intérieur du chemin de câblé protège les câbles des arêtes de la face extrême du fil transversal conformé en U.

De manière remarquable, les longueurs des segments 20, 30 sont identiques.

Mais, plus avantageusement, les seconds segments 30 du fil de rive sont plus longs que les premiers segments.

La longueur de chaque segment sera, par exemple, égale au quart de la distance entre deux fils transversaux en U ou à la moitié.

Sensiblement à mi-hauteur de la paroi latérale du chemin de câbles est prévu un deuxième fil longiligne 2B fixé à l'extérieur de la pièce en U.

De préférence, ce deuxième fil longiligne 2B est rectiligne.

On peut cependant prévoir qu'il soit conformé de la même manière que le fil de rive, c'est à dire composé de segments.

## Revendications

1. Chemin de câbles (1) en treillis obtenu par assemblage d'éléments longilignes (2) métalliques soudés sur des éléments transversaux ou fils (3) conformés en U comprenant notamment des rives sur lesquels les câbles peuvent être déplacés ou frottés sans inconvénients et constituée :
- d'une part, longitudinalement, par une pluralité de fils longilignes (2) rectilignes ou non qui s'étendent dans une direction longitudinale (DL) selon une disposition transversale déterminée et,
- d'autre part, transversalement, par une pluralité de fils longilignes (3) dits transversaux qui apparaissent conformés en U et soudés avec les fils longilignes (2) orientés dans la direction longitudinale (DL), également de manière à respecter une répartition longitudinale préalablement définie,
ce chemin de câbles étant **caractérisé en ce que** :
- d'une part, la face extérieure de chemin de câbles en U porte au moins un fil (2A) dit de rive plié en onde dans un plan sensiblement parallèle à celui défini par le fond du chemin de câbles, ce fil de rive comprenant des premiers segments (20) de droites alignés selon un premier axe et des seconds segments (30) de droites alignés selon un deuxième axe, les dits segments étant reliés par des tronçons dits de liaison et
- d'autre part, c'est à l'extérieur des fils transversaux que sont fixés les premiers segments (20) avec la génératrice supérieure de ce fil de rive qui est sensiblement tangente au plan (P1) horizontal contenant au moins partiellement les faces (3A) dites extrêmes des fils transversaux en U tandis que les seconds segments (30) sont ramenés vers l'intérieur du chemin de câbles et se situent sensiblement dans le plan défini par les branches verticales des fils transversaux en U.

2. Chemin de câbles en treillis selon la revendication 1 **caractérisé en ce que** chacune des faces extrêmes (3A) du fil transversal en U est arasée en biais en direction du fond de la pièce allongée et les premiers segments du fil de rive sont tangents au plan contenant la face biaise des fils transversaux en U.

3. Chemin de câbies en treillis selon la revendication 1 **caractérisé en ce que** les longueurs des segments (20, 30) sont identiques.

4. Chemin de câbles en treillis selon la revendication 1 **caractérisé en ce que** les seconds segments (30) du fil de rive sont plus long que les premiers segments.

5. Chemin de câbles en treillis selon la revendication 1 **caractérisé en ce que** la longueur de chaque segment sera égale au quart de la distance entre deux fils transversaux en U.

6. Chemin de câbles en treillis selon la revendication 1 **caractérisé en ce que** la longueur de chaque segment sera égale à la moitié de la distance entre deux fils transversaux en U.

7. Chemin de câbles en treillis selon la revendication 1 **caractérisé en ce que** la génératrice (100) des seconds segments du fil de rive située au plus près du plan (M) médian vertical du chemin de câbles est à une distance (Q) de ce plan médian qui est inférieure à celle (R) mesurée entre ce plan médian et la génératrice dite interne de la branche verticale du fil transversal en U.
